# EUROPÄISCHE PATENTSCHRIFT

(11) **EP 4 127 520 B1**
(45) Veröffentlichungstag und Bekanntmachung des Hinweises auf die Patenterteilung: **19.08.2026**
(21) Anmeldenummer: 21709371.5
(22) Anmeldetag: 01.03.2021
(51) Int. Cl.: F16H 57/031, F16H 57/029, F16H 57/033

(54) **EINGANGSWELLENDICHTUNGEN FÜR EINE GETRIEBEBAUREIHE**
INPUT SHAFT SEALS FOR A TRANSMISSION DESIGN SERIES
JOINTS D'ÉTANCHÉITÉ D'ARBRE D'ENTRÉE POUR SÉRIE DE CONCEPTION DE TRANSMISSION

(30) Priorität: 31.03.2020 DE 102020204204
(43) Veröffentlichungstag der Anmeldung: 08.02.2023
(73) Patentinhaber: ZF Friedrichshafen AG, 88046 Friedrichshafen (DE)
(72) Erfinder: HETMANIOK, Simon, 58456 Witten (DE); LOHMANN, Christian, 58454 Witten (DE)
(74) Vertreter: ZF Friedrichshafen AG
(86) Internationale Anmeldenummer: PCT/EP2021/054974
(87) Internationale Veröffentlichungsnummer: WO 2021/197727

(56) Entgegenhaltungen:
- WO-A1-03/019041
- DE-A1- 102019 104 262
- JP-B2- 6 242 065
- US-A- 5 651 747

## Beschreibung

Die Erfindung betrifft eine Getriebebaureihe nach dem Oberbegriff von Anspruch 1.

Werden von den Kunden unterschiedliche Anforderungen an die Dichtheit und die Widerstandsfähigkeit gegenüber den am Einbauort herrschenden Umgebungsbedingungen gestellt, müssen unterschiedliche Dichtungslösungen für die Eingangswellen bereitgestellt werden. Dazu ist jeweils eine Neukonstruktion des Getriebeeingangs notwendig.

Der Erfindung liegt die Aufgabe zugrunde, die Konstruktion von Dichtungen für einen Getriebeeingang zu vereinfachen. Diese Aufgabe wird gelöst durch eine Getriebebaureihe nach Anspruch 1. Bevorzugte Weiterbildungen sind in den Unteransprüchen enthalten und ergeben sich aus nachfolgender Beschreibung sowie dem in den Figuren dargestellten Ausführungsbeispiel.

Eine Getriebebaureihe ist eine Anordnung von mindestens zwei Getrieben, die hinsichtlich der Ausprägung mindestens eines technischen Merkmals übereinstimmen.

Die erfindungsgemäße Getriebebaureihe umfasst ein erstes Getriebe und ein zweites Getriebe. Das erste Getriebe und das zweite Getriebe weisen jeweils eine Eingangswelle, ein Gehäuse und einen Deckel auf.

Das Gehäuse des ersten Getriebes und das Gehäuse des zweiten Getriebes bilden jeweils einen Flansch aus. Dies ist eine Gehäuseöffnung mit einem Mittel zur Fixierung des jeweiligen Deckels derart, dass der Deckel die Öffnung mindestens teilweise, vorzugsweise vollständig, verschließt.

In dem Flansch des ersten Getriebes ist der Deckel des ersten Getriebes fixiert. Ebenso ist in dem Flansch des zweiten Getriebes der Deckel des zweiten Getriebes fixiert. Die Fixierung erfolgt jeweils öldicht, das heißt derart, dass zwischen dem Flansch und dem jeweiligen Deckel kein Öl austreten kann. Zwischen dem Flansch und dem jeweiligen Deckel ist zu diesem Zweck bevorzugt eine Dichtung, etwa eine Feststoffdichtung, angebracht.

Die Eingangswelle des ersten Getriebes verläuft durch den Deckel des ersten Getriebes hindurch. Ebenso verläuft die Eingangswelle des zweiten Getriebes durch den Deckel des ersten Getriebes hindurch. Ebenso verläuft die Eingangswelle des zweiten Getriebes durch den Deckel des zweiten Getriebes hindurch. Dies impliziert, dass die Deckel jeweils eine Öffnung aufweisen, durch welche die jeweilige Eingangswelle hindurch verläuft. Zwei Teile jeder Eingangswelle befinden sich dadurch auf verschiedenen Seiten des jeweiligen Deckels. Ein Teil der jeweiligen Eingangswelle befindet sich im inneren Getriebe, ein weiterer Teil außerhalb.

Der Deckel des ersten Getriebes weist mindestens eine Dichtung zur Abdichtung dieses Deckels gegenüber der Eingangswelle des ersten Getriebes auf. Ebenso weist der Deckel des zweiten Getriebes mindestens eine Dichtung zur Abdichtung dieses Deckels gegenüber der Eingangswelle des zweiten Getriebes auf. Die Abdichtung erfolgt jeweils bevorzugt öldicht, das heißt derart, dass kein Öl zwischen den Deckeln und der jeweiligen Eingangswelle aus dem jeweiligen Getriebe austreten kann.

Erfindungsgemäß sind der Flansch des ersten Getriebes und der Flansch des zweiten Getriebes baugleich. Zwei technische Mittel oder Anordnungen von Mitteln sind baugleich, wenn sie in ihren physikalischen Parametern - insbesondere ihrer Material- und Geometrieeigenschaften - im Rahmen der auftretenden Fertigungstoleranzen übereinstimmen.

Im Gegensatz zu den Flanschen sind die Dichtungen unterschiedlich. Die mindestens eine Dichtung des ersten Getriebes unterscheidet sich also von der mindestens einen Dichtung des zweiten Getriebes. Dies bedeutet, dass die Gesamtheit sämtlicher Dichtungen, mit denen der Deckel des ersten Getriebes gegenüber der Eingangswelle des ersten Getriebes abgedichtet ist, sich von der Gesamtheit sämtlicher Dichtungen, mit denen der Deckel des zweiten Getriebes gegenüber der Eingangswelle des zweiten Getriebes abgedichtet ist, unterscheidet.

Zwei technische Mittel oder Anordnungen von Mitteln sind unterschiedlich bzw. unterscheiden sich voneinander, wenn sie nicht baugleich sind. Dies bedeutet, dass in mindestens einem physikalischen Parameter ein Unterschied zwischen den Mitteln oder Anordnungen besteht, der nicht fertigungsbedingt ist, der also außerhalb des Rahmens der auftretenden Fertigungstoleranzen liegt.

Durch die baugleichen Flansche ergeben sich Skaleneffekte, die mit Kosteneinsparungen einhergehen. Die unterschiedlichen Dichtungen ermöglichen dabei, das jeweilige Getriebe, wie oben beschrieben, an die jeweiligen Anforderungen anzupassen.

In einer bevorzugten Weiterbildung weisen die Eingangswelle des ersten Getriebes und die Eingangswelle des zweiten Getriebes jeweils einen Ring auf. Der Ring der Eingangswelle des ersten Getriebes und der Ring der Eingangswelle des zweiten Getriebes sind unterschiedlich. Die Ringe sind bevorzugt kraft- und/oder formschlüssig auf der jeweiligen Eingangswelle fixiert. Die Fixierung erfolgt derart, dass zwischen den Ringen und dem Rest der jeweiligen Welle kein Öl aus dem jeweiligen Getriebe austreten kann.

Mindestens ein Teil der mindestens einen Dichtung des ersten Getriebes dichtet den Deckel des ersten Getriebes gegenüber dem Ring der Eingangswelle des ersten Getriebes ab. Ebenso dichtet mindestens ein Teil der mindestens einen Dichtung des zweiten Getriebes den Deckel des zweiten Getriebes gegenüber dem Ring der Eingangswelle des zweiten Getriebes ab.

Die weiterbildungsgemäße Abdichtung gegenüber den Ringen ist von Vorteil, da die Eingangswellen sich über die Ringe einfach an unterschiedliche Dichtungen des jeweiligen Getriebes anpassen lassen. Insbesondere können in einer bevorzugten Weiterbildung Eingangswellen verwendet werden, die mindestens teilweise baugleich sind.

Weiterbildungsgemäß sind mindestens ein Teil der Eingangswelle des ersten Getriebes und mindestens ein Teil der Eingangswelle des zweiten Getriebes baugleich. Auf den baugleichen Teilen der Eingangswellen ist der jeweilige Ring angebracht. Auf dem mindestens einen Teil der Eingangswelle des ersten Getriebes ist also der Ring der Eingangswelle des ersten Getriebes angebracht. Ebenso ist auf dem mindestens einen Teil der Eingangswelle des zweiten Getriebes der Ring der Eingangswelle des zweiten Getriebes angebracht. Vorzugsweise sind die Eingangswellen mit Ausnahme des jeweiligen Rings vollständig baugleich. Die Eingangswellen bestehen dann aus einem Grundkörper und dem jeweiligen Ring, wobei die Grundkörper baugleich sind. Bevorzugt ist die mindestens eine Dichtung des zweiten Getriebes als Taconite-Dichtung weitergebildet. Eine Taconite-Dichtung ist eine Dichtungsanordnung, die einen Radialwellendichtring, eine V-Ring-Dichtung und eine Labyrinthdichtung umfasst. Diese drei Einzeldichtungen sind in Reihe, das heißt entlang eines abzudichtenden Spalts angeordnet. Durch den Spalt austretendes Öl muss der Reihe nach die drei Dichtungen passieren.

In einer bevorzugten Weiterbildung bilden die V-Ring-Dichtung und die Labyrinthdichtung einen Hohlraum. Der Hohlraum wird unter anderem durch die V-Ring-Dichtung und die Labyrinthdichtung begrenzt. Er ist mindestens teilweise mit Fett gefüllt. Dadurch verbessert sich die Dichtwirkung.

Die mindestens eine Dichtung des ersten Getriebes ist bevorzugt als Radialwellendichtring weitergebildet. Der Radialwellendichtring bildet weiterbildungsgemäß die mindestens eine Dichtung. Dies bedeutet, dass der Deckel des ersten Getriebes ausschließlich durch den Radialwellendichtring gegenüber der Welle bzw. dem Ring der Welle abgedichtet ist.

In einer darüber hinaus bevorzugten Weiterbildung sind nicht nur die Flansche, sondern darüber hinaus die gesamten Gehäuse des ersten Getriebes und des zweiten Getriebes baugleich.

Eine ähnliche Getriebebaureihe ist gemäß der Präambel von Anspruch 1 aus der DE102019104262A bekannt.

Ein bevorzugtes Ausführungsbeispiel der Erfindung ist in den Figuren dargestellt. Im Einzelnen zeigt:
Fig. 1 einen Ausschnitt eines ersten Getriebes einer Baureihe; und
Fig. 2 einen Ausschnitt eines zweiten Getriebes der Baureihe.

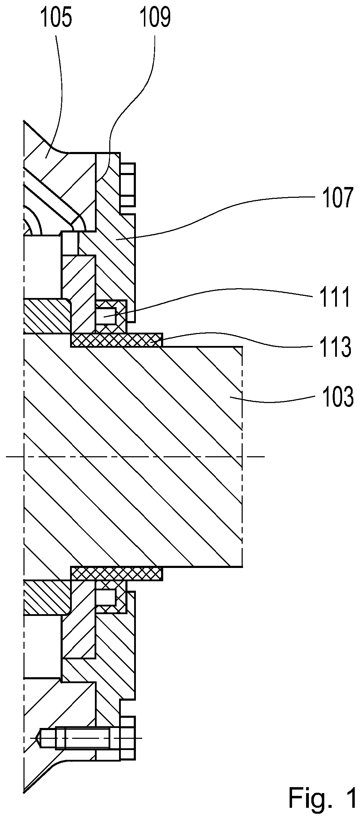

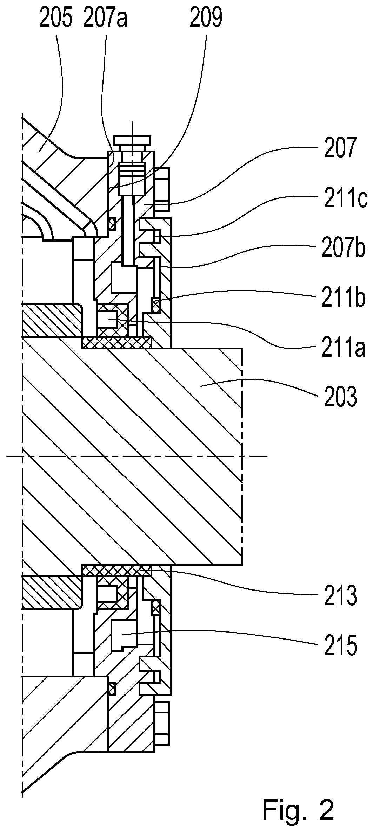

Die Getriebe gemäß den Figuren 1 und 2 weisen jeweils eine Eingangswelle 103, 203 auf. Die Eingangswellen 103, 203 verlaufen durch eine Öffnung des jeweiligen Gehäuses 105, 205 hindurch. Um diese Öffnung zu verschließen, ist jeweils ein Deckel 109, 209 vorgesehen.

Das Gehäuse 105 des ersten Getriebes und das Gehäuse 205 des ersten Getriebes bilden jeweils einen Schraubflansch 109, 209 aus. Die Schraubflansche 109, 209 sind baugleich. Mit dem Schraubflansch 109 des ersten Getriebes ist der Deckel 107 des ersten Getriebes verschraubt. Ebenso ist der Deckel 207 des zweiten Getriebes mit dem Schraubflansch 209 des zweiten Getriebes verschraubt.

Die Deckel 107, 207 bilden ihrerseits eine Öffnung aus, durch welche die jeweilige Eingangswelle 103, 203 hindurch verläuft. Um diese Öffnung gegenüber der jeweiligen Eingangswelle 103, 203 abzudichten, sind Dichtungen 111, 211a, 211b, 211c vorgesehen.

Der Deckel 111 des ersten Getriebes weist einen einfachen Radialwellendichtring 111 auf. Der Radialwellendichtring 111 ist in dem Deckel 107 des ersten Getriebes fixiert.

Eine Dichtlippe des Radialwellendichtrings 111 läuft auf der Oberfläche eines Rings 113, der auf die Eingangswelle 103 des ersten Getriebes aufgeschrumpft ist. Ein entsprechender Ring 213 ist auf die Eingangswelle 203 des zweiten Getriebes aufgeschrumpft. Der Ring 113 des ersten Getriebes und der Ring 213 des zweiten Getriebes unterscheiden sich voneinander hinsichtlich ihrer Bauteilgeometrie. Dies ermöglicht es, in dem zweiten Getriebe eine unterschiedliche Dichtungsanordnung zu verwenden.

Die Dichtungsanordnung des zweiten Getriebes umfasst einen Radialwellendichtring 211a, eine V-Ring-Dichtung 211b und eine Labyrinthdichtung 211c. Der Deckel 207 ist zur Aufnahme dieser Dichtungsanordnung zweistückig ausgeführt. Ein erstes Stück 207a des Deckels 207 nimmt den Radialwellendichtring 211a auf. Das erste Stück 207a ist mit dem Schraubflansch 209 des zweiten Getriebes verschraubt. Entsprechend ist das erste Stück 207a gehäusefest angeordnet.

Ein zweites Stück 207b des Deckels 207 des ersten Getriebes ist drehfest auf der Eingangswelle 203 des ersten Getriebes fixiert. Dreht sich die Eingangswelle 203, dreht sich entsprechend das zweite Stück 207b des Deckels 207 des ersten Getriebes relativ zu dem ersten Stück 207a.

Die V-Ring-Dichtung 211b ist in dem zweiten Stück 207b des Deckels 207 des ersten Getriebes fixiert. Ihre Dichtlippe läuft auf dem ersten Stück 207a des Deckels 207 des ersten Getriebes.

Weiterhin bilden die Stücke 207a, 207b des Dichtrings 207 des zweiten Getriebes jeweils einen Teil der Labyrinthdichtung 211c aus. Zwischen der V-Ring-Dichtung 211b und der Labyrinthdichtung 211c befindet sich ein Hohlraum 215. Dieser ist mit Fett gefüllt.

### Bezugszeichen

- 103: Eingangswelle
- 105: Gehäuse
- 107: Deckel
- 109: Schraubflansch
- 111: Radialwellendichtring
- 113: Ring
- 203: Eingangswelle
- 205: Gehäuse
- 207: Deckel
- 209: Schraubflansch
- 211a: Radialwellendichtring
- 211b: V-Ring-Dichtung
- 211c: Labyrinthdichtung
- 213: Ring
- 213a: erstes Stück des Rings
- 213b: zweites Stück des Rings
- 215: Hohlraum

## Patentansprüche

1. Getriebebaureihe mit mindestens zwei Getrieben, die jeweils eine Eingangswelle (103, 203), ein Gehäuse (105, 205) und einen Deckel (107, 207) aufweisen; wobei die Gehäuse (105, 205) jeweils einen Flansch (109, 209) ausbilden, in dem der jeweilige Deckel (107, 207) öldicht fixiert ist; wobei
die Eingangswellen (103, 203) durch den jeweiligen Deckel (107, 207) hindurch verlaufen; wobei
die Deckel (107, 207) jeweils mindestens eine Dichtung (111, 211a, 211b, 211c) zur Abdichtung gegenüber der jeweiligen Eingangswelle (103, 105) aufweisen; wobei
die Flansche (109, 209) baugleich und die Dichtungen (111, 211a, 211b, 211c) nicht baugleich sind; und wobei
die Eingangswellen (107, 207) jeweils einen Ring (113, 213) aufweisen; und wobei die mindestens eine Dichtung (111, 211a, 211b, 211c) jeweils mindestens teilweise zur Abdichtung gegenüber dem jeweiligen Ring (113, 213) ausgebildet ist; **dadurch gekennzeichnet, dass**
die Ringe (113, 213) nicht baugleich sind.

2. Getriebebaureihe nach Anspruch 1; **dadurch gekennzeichnet, dass** die Deckel (107, 207) nicht baugleich sind.

3. Getriebebaureihe nach einem der vorhergehenden Ansprüche; **dadurch gekennzeichnet, dass**
die Eingangswellen (103, 203) in jeweils mindestens einem Teil baugleich sind; wobei
auf dem mindestens einen Teil der jeweilige Ring (113, 213) angebracht ist.

4. Getriebebaureihe nach einem der vorhergehenden Ansprüche; **dadurch gekennzeichnet, dass**
die mindestens eine Dichtung (211a, 211b, 211c) mindestens eines der Getriebe als Dichtungsanordnung, die einen Radialwellendichtring (211a), eine V-Ring-Dichtung (211b) und eine Labyrinthdichtung (211c) umfasst, ausgebildet ist.

5. Getriebebaureihe nach einem der vorhergehenden zwei Ansprüche; **dadurch gekennzeichnet, dass**
die V-Ring-Dichtung (211b) mit der Labyrinthdichtung (211c) einen Hohlraum (215) bildet, der mindestens teilweise mit Fett gefüllt ist.

6. Getriebebaureihe nach einem der vorhergehenden zwei Ansprüche; **dadurch gekennzeichnet, dass**
die mindestens eine Dichtung (111) mindestens eines weiteren der Getriebe als Radialwellendichtring ausgebildet ist.

7. Getriebebaureihe nach einem der vorhergehenden Ansprüche; **dadurch gekennzeichnet, dass**
die Gehäuse (105, 205) baugleich sind.

## Claims

1. Transmission series having at least two transmissions which each have an input shaft (103, 203), have a housing (105, 205) and have a cover (107, 207); wherein the housings (105, 205) each form a flange (109, 209) in which the respective cover (107, 207) is fixed in an oil-tight manner; wherein
the input shafts (103, 203) extend through the respective covers (107, 207); wherein
the covers (107, 207) each have at least one seal (111, 211a, 211b, 211c) for sealing in relation to the respective input shaft (103, 105); wherein
the flanges (109, 209) are of identical construction and the seals (111, 211a, 211b, 211c) are not of identical construction; and wherein
the input shafts (107, 207) each have a ring (113, 213); and wherein
the at least one seal (111, 211a, 211b, 211c) is in each case configured at least partially for sealing in relation to the respective ring (113, 213); **characterized in that**
the rings (113, 213) are not of identical construction.

2. Transmission series according to Claim 1; **characterized in that**
the covers (107, 207) are not of identical construction.

3. Transmission series according to either of the preceding claims; **characterized in that**
the input shafts (103, 203) are of identical construction in in each case at least one part; wherein
the respective ring (113, 213) is mounted on the at least one part.

4. Transmission series according to one of the preceding claims; **characterized in that**
the at least one seal (211a, 211b, 211c) of at least one of the transmissions is in the form of a sealing arrangement comprising a radial shaft sealing ring (211a), a V-ring seal (211b) and a labyrinth seal (211c).

5. Transmission series according to either of the preceding two claims; **characterized in that**
the V-ring seal (211b) forms together with the labyrinth seal (211c) a cavity (215) which is filled at least partially with grease.

6. Transmission series according to either of the preceding two claims; **characterized in that**
the at least one seal (111) of at least one further one of the transmissions is in the form of a radial shaft sealing ring.

7. Transmission series according to one of the preceding claims; **characterized in that**
the housings (105, 205) are of identical construction.

## Revendications

1. Série de transmissions comprenant au moins deux transmissions, qui comportent respectivement un arbre d'entrée (103, 203), un logement (105, 205) et un couvercle (107, 207) ; les logements (105, 205) formant respectivement une bride (109, 209), dans laquelle le couvercle respectif (107, 207) est fixé de manière étanche à l'huile ;
les arbres d'entrée (103, 203) traversant le couvercle respectif (107, 207) ;
les couvercles (107, 207) comportant respectivement au moins un joint d'étanchéité (111, 211a, 211b, 211c) destiné à assurer l'étanchéité vis-à-vis de l'arbre d'entrée respectif (103, 105) ;
les brides (109, 209) étant de conception identique et les joints d'étanchéité (111, 211a, 211b, 211c) n'étant pas de conception identique ; et
les arbres d'entrée (107, 207) comportant respectivement une bague (113, 213) ; et
ledit au moins un joint d'étanchéité (111, 211a, 211b, 211c) étant respectivement conçu au moins en partie pour assurer l'étanchéité vis-à-vis de la bague respective (113, 213), **caractérisée en ce que**
les bagues (113, 213) ne sont pas de conception identique.

2. Série de transmissions selon la revendication 1 ; **caractérisée en ce que**
les couvercles (107, 207) ne sont pas de conception identique.

3. Série de transmissions selon l'une des revendications précédentes ; **caractérisée en ce que**
les arbres d'entrée (103, 203) sont respectivement de conception identique dans au moins une partie ;
la bague respective (113, 213) étant montée sur ladite au moins une partie.

4. Série de transmissions selon l'une des revendications précédentes ; **caractérisée en ce que**
ledit au moins un joint d'étanchéité (211a, 211b, 211c) d'au moins l'une des transmissions est réalisé sous la forme d'un ensemble d'étanchéité comprenant une bague d'étanchéité d'arbre radial (211a), un joint d'étanchéité annulaire en V (211b) et un joint d'étanchéité à labyrinthe (211c).

5. Série de transmissions selon l'une des deux revendications précédentes ; **caractérisée en ce que**
le joint d'étanchéité annulaire en V (211b) forme avec le joint d'étanchéité à labyrinthe (211c) une cavité (215) qui est au moins partiellement remplie de graisse.

6. Série de transmissions selon l'une des deux revendications précédentes ; **caractérisée en ce que**
ledit au moins un joint d'étanchéité (111) d'au moins une autre des transmissions est réalisé sous forme de bague d'étanchéité d'arbre radial.

7. Série de transmissions selon l'une des revendications précédentes ; **caractérisée en ce que**
les logements (105, 205) sont de conception identique.
